# EUROPEAN PATENT APPLICATION

(11) **EP 2 767 445 A1**
(43) Date of publication of application: **20.08.2014**
(21) Application number: 13155639.1
(22) Date of filing: 18.02.2013
(51) Int. Cl.: B60R 25/24

(54) **Method and start assisting system for facilitating start activities of a vehicle**

(71) Applicant: Volvo Car Corporation, 40 531 Göteborg (SE)
(72) Inventor: Edgren, Claes, 46154 Trollhättan (SE)
(74) Representative: Kraenzmer, Martin

(57) **Abstract**

The present disclosure relates to a method performed by a start assisting system (12) for facilitating start activities preceding start of an engine (204) of a vehicle (10). The start assisting system determines (301) whether predetermined pre-start conditions are fulfilled, which pre-start conditions comprise a condition associated with a wireless electronic key (206) related to the vehicle being identified to be present. The start assisting system furthermore detects (302) a start intention activity of a user of the vehicle by means of a detecting device (16) adapted to be comprised in a user driving manoeuvring device (14) of the vehicle, which detecting device is adapted to detect a body part of the user being situated at the driving manoeuvring device thus indicating the start intention activity. Additionally, the start assisting system initiates (303) start of the engine, should the pre-start conditions be determined to be fulfilled while the start intention activity is detected.

Accordingly, the user may initiate vehicle start with essentially no further effort required than merely placing a body part, e.g. a hand, at, e.g. on, the driving manoeuvring device, e.g. a gear shift, which the user commonly anyway does when about to start the vehicle.

The disclosure also relates to a start assisting system in accordance with the foregoing, as well as a vehicle comprising such a start assisting system.

## Description

### TECHNICAL FIELD

The present disclosure relates to a start assisting system and a method performed therein for facilitating start activities preceding start of an engine of a vehicle.

### BACKGROUND

When it comes to starting an engine of a vehicle, and different implementations related therewith, numerous solutions are represented across a wide variety of vehicles, platforms and models. One solution may for instance differ from another with regards to activities necessary to be performed by the driver prior to vehicle start, and characteristics related to the vehicle key. Today, traditional mechanical keys are commonly replaced by electronic keys providing improved functionality as well as reduction of actions required by the driver prior to vehicle start. With the implementation of a sophisticated electronic key, a vehicle engine may be started and/or stopped without the driver needing to physically insert the key and turning the ignition. Instead, as the driver approaches the vehicle, the vehicle may sense the electronic key carried by the driver and in addition to unlocking the vehicle door(s) should the vehicle be e.g. a car, a potential immobilizer and/or steering wheel lock may be disabled and the engine started. Said start may for instance be initiated by the driver pushing a start/stop button, or turning a start/stop knob, comprised in e.g. the dashboard. Additionally, different sorts of conditions may commonly be required to be fulfilled for the engine to start, such as for instance a clutch pedal being pressed should the vehicle be a car with manual transmission, or a gear shift to be in park (P) position should the vehicle be a car with automatic transmission.

One solution relating to start of a vehicle by means of an electrical key is for instance provided in DE 100 34 348, which discloses an accepting device for taking an ID transmitter designed as an electronic key, without a key bit, fitting close to a gear lever. A button operating element, i.e. a start-stop-button, fits on the topside of the gear lever. After inserting the ID transmitter into the accepting device and activating the button operating element, authority is granted. Thereby, a system is provided for starting up a motor vehicle without a mechanical ignition lock, and accordingly a convenient implementation is suggested. However, there is still room for improvements with regards to enabling less effort to be required by the driver prior to vehicle start.

### SUMMARY OF THE INVENTION

It is therefore an object of embodiments herein to facilitate start activities preceding start of an engine of a vehicle.

According to a first aspect of embodiments herein, the object is achieved by a method performed by a start assisting system for facilitating start activities preceding start of an engine of a vehicle. The start assisting system determines whether one or several predetermined pre-start conditions are fulfilled, which pre-start conditions comprise a condition associated with a wireless electronic key related to the vehicle being identified to be present. The start assisting system furthermore detects a start intention activity of a user of the vehicle by means of a detecting device adapted to be comprised in a user driving manoeuvring device of the vehicle. The detecting device is adapted to detect a body part of the user being situated at the user driving manoeuvring device thus indicating the start intention activity. Additionally, the start assisting system initiates start of the engine, should the pre-start conditions be determined to be fulfilled while the start intention activity is detected. Thereby, prior to engine start, if it is established that the pre-start conditions are fulfilled when a body part of the user is detected to have been situated at, e.g. on, the user driving manoeuvring device - which is interpreted to imply an intention to start the vehicle - engine start may be initiated. Accordingly, the user may initiate start with essentially no further effort required than merely placing a body part, e.g. a hand, at the driving manoeuvring device, e.g. on a gear shift, which the user commonly anyway does when about to start the vehicle. There is hence no need for the user to perform a separate act to accomplish start initiation, e.g. reaching for and/or pressing a dedicated start button or turning a mechanical key, whereby less effort is required by the user to initiate engine start. For that reason, start activities preceding start of an engine of a vehicle have been facilitated.

Another advantage is that by initiating start of the engine if the pre-start conditions are determined to be fulfilled when the start intention activity is detected, the start initiation may be perceived to be performed automatically, thus implying improved convenience.

Yet another advantage is that with the introduction of the start assisting system, should the start assisting system be provided in addition to a traditional implementation such as e.g. a start/stop button, the user is given the opportunity to for each start-up occasion choose his or her preferred way of initiating engine start depending on e.g. the situation at hand, or his or her preferences.

The technical features and corresponding advantages of the above mentioned method will be discussed in further detail in the following.

By introducing a start assisting system for facilitating start activities preceding start of an engine of a vehicle, support for an improved way of a handling engine start related activities is provided. The introduced start assisting system may preferably be provided in addition - i.e. as a complement - to e.g. a traditional implementation providing support for start of the engine, e.g. a start/stop button in the instrument panel. Thereby, said e.g. start/stop button may be utilized for turning off the engine, and in situations when the traditional solution is preferred rather than the introduced start assisting system, e.g. when the user intends to start the vehicle without the intention of (immediately) driving off. "Start activities preceding start of an engine" is here intended to at least refer to activities associated with an engine start performed prior to start thereof. "Engine", commonly also referred to as motor, is here intended to be interpreted to refer to at least one or a combination of propulsion engines utilized to propel the vehicle, for instance an internal combustion engine such as a gasoline engine, diesel engine, gas engine, hydrogen-fueled engine, compressed air engine, or an electric engine. The referred to vehicle may be any arbitrary vehicle, for instance an engine-propelled vehicle, such as e.g. a car, truck, lorry, van, bus, tractor, military vehicle, scooter, motorcycle, air plane, vessel such as e.g. a ship, and/or golf cart, or alternatively a rail-bound vehicle, such as e.g. a train or tram. The vehicle may have arbitrary type of transmission, such as for instance manual, automatic, semi-automatic or continuously variable (CVT) transmission. Furthermore, said vehicle may be one of traditional vehicles, such as vehicles with internal combustion engines (ICEs), and/or electrical vehicles, i.e. electrically chargeable vehicles, such as for instance plug-in electrical vehicles (PEVs) and/or grid-enabled vehicles (GEVs) and/or battery electric vehicles (BEVs) e.g. using chemical energy stored in rechargeable battery packs, and/or hybrid electric vehicles using both electric motors and internal combustion engines which for instance are continually recharged with power from the internal combustion engine and/or regenerative braking, e.g. plug-in hybrid electric vehicles (PHEV) and/or range-extended electric vehicles (REEVs). So called new energy vehicles (NEVs) and/or neighborhood electric vehicles (NEVs) are likewise feasible.

Since the start assisting system determines whether predetermined pre-start conditions are fulfilled, conditions regarded to be relevant prior to an engine start initiation are taken into consideration. Furthermore, since the pre-start conditions comprise a condition associated with a wireless electronic key related to the vehicle being identified to be present, consideration is taken to whether said wireless electronic key is within close range of the vehicle. With identification of a wireless electronic key related to the vehicle being identified to be present, functionality traditionally provided by a mechanical key, such as turning the key in the ignition slot, may be provided by the wireless electronic key without physical contact. Furthermore, should the vehicle be e.g. a passenger car, commonly known features such as doors being automatically unlocked by proximity of the wireless electronic key, may be supported. That is, the user may for instance by keeping said key in e.g. his or her pocket, automatically unlock the vehicle door by pulling the door handle or the trunk release, or by pressing a button on the key. "Wireless electronic key related to the vehicle" is here intended to be interpreted to at least refer to an electronic device such as for instance a smart key, key fob, digitalized key, token, or electronic remote control providing wireless electronic access and/or authorization to the specific vehicle in question. The wireless electronic key, in the following referred to as merely the key, may for instance be identified via one or several vehicle antennas and a radio pulse generator in a housing of the key, and e.g. an RFID tag attached to the key checked by a control unit of the vehicle. The key being "identified to be present" is here intended to refer to the key, and subsequently the user, being close by the vehicle. "Present" may, should said vehicle be e.g. a passenger car, imply the key being present within the vehicle. When it comes to determination of whether predetermined pre-start conditions are fulfilled, such determination is preferably performed by a condition fulfilment determining unit which may be comprised in any suitable electronic control device, e.g. by one or several integrated arbitrary electronic control unit (ECU) nodes such as e.g. a main central node, either on-board or remotely. Furthermore, said determination may imply retrieving information about the fulfilment of the pre-start conditions from implementations already available e.g. on-board the vehicle, the data of which may be provided for purposes other than those covered by this disclosure. Such data may for instance be available from an ECU comprising the e.g. condition fulfilment determining unit, and/or retrieved via e.g. a communication bus from other e.g. ECUs. Thereby, with the reuse of already available data, the user interface system may be implemented in a more efficient and cost effective manner. It should further be noted that "pre-start conditions" throughout this disclosure is intended to be interpreted to not necessarily comprise a plurality of conditions, but likewise merely a single condition; here the condition associated with a wireless electronic key.

Since the start assisting system furthermore detects a start intention activity of a user of the vehicle by means of a detecting device adapted to be comprised in a user driving manoeuvring device of the vehicle, the user may be detected when in the act of a start activity involving the user driving manoeuvring device. Furthermore, since the detecting device is adapted to detect a body part of the user being situated at the user driving manoeuvring device thus indicating the start intention activity, such a detection may take place by the user merely placing a body part at the user driving manoeuvring device. "Situated" is here intended to be interpreted to likewise include at least positioned and placed. Furthermore, the "user" is throughout this disclosure, for the sake of simplicity, commonly likewise referred to as the "driver" (of the vehicle), although the user likewise may refer to for instance a passenger of the vehicle or any other person of which a body part may be detected by the detecting device. A "body part" of the driver may for instance refer to at least part of a hand, such as a palm and/or a finger(s), or at least part of a foot. The "user driving manoeuvring device" is here intended to be interpreted to refer to a device of the vehicle utilizable by the driver when manoeuvring driving of the vehicle, such as e.g. a transmission control device, braking device, accelerator device, steering device or a clutch device, which device the driver commonly and/or traditionally may be in contact with prior to, or simultaneous with, initiating a vehicle start. The user driving manoeuvring device may accordingly refer to for instance a lever, such as a transmission control lever, which commonly is gripped by the driver when he or she is about to start the vehicle, a steering wheel or joystick, or a brake pedal, accelerator pedal, or clutch pedal, which commonly are pressed, or by other means affected, by the driver in the act of initiating a vehicle start. Accordingly, the "start intention activity" may thus for instance be represented by the driver positioning a hand on a transmission lever and/or a foot on the brake pedal. Said detection may be triggered by any arbitrary body part of the driver, regardless of whether an intermediate layer, such as for instance a glove or shoe, intermediates the body part of the driver and the detecting device. Furthermore, conditions for detection, i.e. presence, of the driver, may be implementation specific. For instance, a period of time during which the driver needs to be "present", i.e. having a body part situated at the user driving manoeuvring device, in order to be considered detected, may vary with the implementation at hand, and may e.g. vary from a few milliseconds to a few seconds. Size and shape of the detecting device may vary with the implementation at hand, and for instance be adapted to fit dimensions of a section of the user driving manoeuvring device in which the detecting device is adapted to be comprised. Furthermore, the "detecting device" is here intended to refer to any arbitrary sensing device capable of detecting a body part of the user being situated at the user driving manoeuvring device. The detecting device may thus be represented by any device capable of detecting the driver without him or her having to perform any effort other than essentially placing a body part at, e.g. on, the user driving manoeuvring device. Start activities traditionally commonly performed, such as e.g. the additional action of pressing a physical button, may accordingly be avoided. Rather than being represented by a traditional physical button which need to be pushed to induce activation, the detecting device may be represented by for instance a touch sensitive device, an optical sensitive device comprising an optical sensor which may detect said body part, or a micro switch device comprising a micro switch being of a size so small that the driver may not perceive the micro switch as a traditional button requiring a pushing effort to be activated. Alternatively, the detecting device may be represented by for instance a pressure sensitive device comprising a pressure sensor or a torque sensitive device comprising a torque sensor which may detect the body part, e.g. the driver's hand, when gripping e.g. the transmission control lever. Thresholds of pressing and/or twisting motion required to trigger detection may be adapted to the implementation at hand.

Since the start assisting system initiates start of the engine should the pre-start conditions be determined to be fulfilled while the start intention activity is detected, engine start initiation may be achieved in an manner which may be perceived as automatic to the driver, without him or her having to e.g. turn a mechanical key or e.g. make the separate effort of pushing a start button. Initiation of start of the engine may for instance be performed by means of a start initiating unit, e.g. comprised in any suitable electronic control device, e.g. by one or several integrated arbitrary electronic control unit (ECU) nodes, either on-board or remotely. Furthermore, said start initiation may imply that e.g. one or several parameters are set indicating that the engine may be started, or for instance that similar information is stored or that a message is submitted to the concerned e.g. ECU, comprising instructions of the same. A subsequent physical start of the engine may be performed in any commonly known suitable manner. Once the engine is running, the detecting device preferably provides no functionality with regards to e.g. stopping the engine from running; such functionality may rather be provided by means of e.g. a traditional start/stop button or switch.

According to an embodiment, the detecting device may comprise a touch sensitive area adapted to detect presence of the body part. Thereby, a driver start intention activity may be detected without the driver needing to make any other effort than placing his or her body part at the user driving manoeuvring device such that presence of said body part may be sensed. Accordingly, by implementing a touch sensitive area rather than e.g. a traditional physical start/stop button which need to be pushed, a single act of merely placing said body part at, e.g. on, the user driving manoeuvring device may lead to a subsequent start initiation of the engine. "Touch sensitive area" is here intended to be interpreted to at least refer to a touch sensing section, such as for instance a sensor, capable of sensing touch from the driver. Said touch may be accomplished by any arbitrary body part of the driver, regardless of whether an intermediate layer, such as for instance a glove or shoe, intermediates the body part of the driver and the touch sensing device. Furthermore, conditions for detecting touch, i.e. presence, of the driver, may be implementation specific. For instance, a period of time during which the driver needs to be "present", that is touching the touch sensitive area, in order to be considered detected, may vary with the implementation at hand, and may e.g. vary from a few milliseconds to a few seconds. Size and shape of the touch sensitive area may vary with the implementation at hand, and for instance be adapted to fit dimensions of a section of the user driving manoeuvring device in which the detecting device is adapted to be comprised.

According to another embodiment, the detecting device may be adapted to be comprised in a hand-operated transmission control lever of the vehicle, which detecting device is adapted to detect at least a part of a hand and/or finger(s) of the user being situated on the transmission control lever. Thereby, the user driving manoeuvring device is represented by a hand-operated transmission control lever which commonly is gripped by the driver when he or she is about to start the vehicle. Accordingly, since the detecting device is adapted to detect at least a part of a hand and/or finger(s) of the user being situated on the transmission control lever, detection may be triggered in a convenient and by the driver perceived automatic manner. "Hand-operated transmission control lever" is here intended to be interpreted to at least refer to a device adapted to meet at least part of the hand of the driver, by means of which gear selection maneuvering - e.g. gear selection of the vehicle - may be performed. The transmission control lever, which may be a manual, automatic, semi-automatic or continuously variable (CVT) transmission control lever, is for instance represented by a gear shift, which may also be referred to as e.g. gear shifter, gear stick, gear knob, gear lever, hand control lever, control lever, or gear-change lever. Furthermore, the transmission control lever may for instance be arranged between front seats of the vehicle - should the vehicle be e.g. a car - for instance on the center console, on the dash board, the transmission tunnel, directly on the vehicle floor, or on the steering column. Alternatively, the transmission control lever may for instance be represented by a shift lever arranged on a handlebar of e.g. a motorcycle.

According to a further embodiment, the detecting device may be adapted to be comprised in a top section of the transmission control lever. Thereby, the detecting device is adapted to be comprised in a section of the transmission control lever where it is natural for the driver to place his or her hand. Accordingly, when the driver places his or her hand on the transmission control lever - an act commonly performed by the driver prior to initiating start - at least a part of the hand, e.g. at least a part of the palm, of the driver covers at least part of the detecting device. A "top section" of the transmission control lever is here intended to be interpreted to at least refer to a section of the lever arranged to meet a potential driver's palm and/or finger(s) when he or she grabs said lever. The top section may for instance be comprised in a knob, commonly referred to as gear knob, shift knob, gear shift knob, or stick shift knob, which partly may form a handle for the transmission control lever.

According to one embodiment, the action of the start assisting system initiating start of the engine may further comprise starting the engine. Thereby, in addition to initiating start, the engine may be cranked if the pre-start conditions are determined to be fulfilled while the start intention activity is detected.

According to another embodiment, the pre-start conditions may further comprise a condition associated with an immobilizer of the vehicle being in a disabled state and/or a condition associated with a steering device lock of a steering device of the vehicle being in an unlocked state following the wireless electronic key being identified to be present. Thereby, by introducing a condition associated with the immobilizer being in a disabled state, engine start initiation may be prevented should said immobilizer condition not be fulfilled. In a similar manner, alternatively or additionally, by introducing a condition associated with the steering device lock being in an unlocked state, engine start may be prevented should said steering device lock condition not be fulfilled. Accordingly, with implementation of one or both of said further conditions, further requirements related to security features associated with identifying the correct wireless electronic key need to be fulfilled in order for engine start to be allowed to be initiated. "Immobilizer of the vehicle being in a disabled state" is here intended to be interpreted in a broad manner, at least referring to an electronic security device fitted to - i.e. connected with - the specific vehicle in question being unlocked. Should the immobilizer not be in the disabled state, i.e. unless the correct wireless electronic key is identified to be present, the immobilizer may in addition to preventing the engine from running, for instance prevent doors from being unlocked should the vehicle be e.g. a passenger car. Furthermore, "steering device" is here intended to be interpreted in a broad manner, for instance referring to a steering wheel, a handle bar or a joystick. "Steering device lock of the steering device being in an unlocked state" is here intended to be interpreted to at least refer to the steering device, e.g. a steering wheel, not being restrained from physical movement, e.g. by means of a steering wheel lock. The opposite, a locked state, may be the case without a wireless electronic key related to the vehicle being identified to be present.

According to yet another embodiment, the pre-start conditions may further comprise a condition associated with at least one door of the vehicle being in a closed position, a condition associated with a driver seat belt arrangement of the vehicle being in a buckled position, and/or a condition associated with a braking device of the vehicle being in an affected position. Thereby, by introducing a condition associated with at least one door of the vehicle being in a closed position, engine start initiation may be prevented should said door condition not be fulfilled. In a similar manner, alternatively or additionally, by introducing a condition associated with the driver seat belt arrangement being in a buckled position, engine start initiation may be prevented should said seat belt condition not be fulfilled. Yet again, alternatively or additionally, by introducing a condition associated with the braking device being in an affected position, engine start initiation may be prevented should said braking condition not be fulfilled. Accordingly, with implementation of one or several of said further conditions, further requirements related to the vehicle being in a start-ready condition need to be fulfilled in order for engine start to be allowed to be initiated. Thereby, the start assisting system may interpret a presumed start intention situation with improved certainty. "At least one door being in a closed position" is here intended to be interpreted in a broad manner, likewise including the at least one door having been essentially shut closed, and/or closed enough to be considered closed by e.g. sensors configured for determination thereof. The referred to door(s) may be any door which may constitute a hazard if being open while driving, and may for instance refer to a driver door, passenger door, backseat passenger door or a door of a trunk or engine hood, such as an engine bonnet, of the vehicle. Preferably, all such doors are in a closed position. Furthermore, "driver seat belt arrangement being in a buckled position" is here intended to be interpreted to at least refer to the driver seat belt locking mechanism being engaged, i.e. locked. Additionally, "braking device" is here intended to be interpreted in a broad manner, for instance referring to a brake pedal, such as a foot brake pedal, or a brake lever, such as a hand brake lever. The braking device being in an "affected position" is here intended to be interpreted to at least define a physical state of the brake device in which the braking device at least to some extent is pressed by the driver, or by other means activated to provide a braking effect on the vehicle. The amount of e.g. pressure required for the braking device to be considered to be in an affected position may change with the implementation at hand, and may for instance require the e.g. brake pedal to be pressed to essentially its maximum limit.

According to yet another embodiment, the pre-start conditions may further comprise a condition associated with an automatic, semi-automatic or continuously variable (CVT) transmission control lever of the vehicle being in a non-propelling position in which the vehicle is restricted from being propelled by the engine, for instance a parking (P) state or a neutral (N) state. Thereby, by introducing a condition associated with the transmission control lever being in a non-propelling position, engine start initiation may be prevented should said lever condition not be fulfilled. Accordingly, a further requirement related to the vehicle being in a start-ready condition need to be fulfilled in order for engine start to be allowed to be initiated. Thereby, the start assisting system may interpret a presumed start intention situation with improved certainty. "Automatic, semi-automatic or continuously variable (CVT) transmission control lever" is here intended to at least relate to a control lever which is associated with - at least to some extent - automatic transmission of the vehicle. With such transmission, the driver may be freed from having to shift gears manually. Furthermore, "non-propelling position in which the vehicle is restricted from being propelled by the engine" is here intended to at least define a physical state of the transmission control lever in which the engine is restricted from inflicting movement to the vehicle. Such as non-propelling position may be represented by e.g. a parking (P) state, in which for instance an output shaft of transmission is locked preventing the vehicle from moving by means of the engine in any direction. Alternatively and/or additionally, such a non-propelling position may be represented by e.g. a neutral (N) state, in which the engine may be disconnected from the drive wheels of the vehicle e.g. implying that no gears are engaged.

According to an alternative embodiment, the pre-start conditions may further comprise a condition associated with a clutch device of the vehicle being in an affected position, or a condition associated with a manual transmission control lever of the vehicle being in a non-propelling position in which the vehicle is restricted from being propelled by the engine, for instance a neutral state (N). Thereby, by introducing a condition associated with the clutch device being in an affected position, engine start initiation may be prevented should said clutch condition not be fulfilled. In a similar manner, by alternatively introducing a condition associated with the lever being in a non-propelling position, engine start may be prevented should said lever condition not be fulfilled. Accordingly, with implementation of the former or the latter of said further conditions, a further requirement related to the vehicle being in a start-ready condition need to be fulfilled in order for engine start to be allowed to be initiated. Thereby, the start assisting system may interpret a presumed start intention situation with improved certainty. "Manual transmission control lever" is here intended to at least relate to a control lever which is associated with - at least to some extent - manual transmission of the vehicle. With such transmission, the driver may need to have to shift gears manually, for instance while pressing the clutch device, subsequently disengaging the engine from e.g. drivetrain and wheels of the vehicle. "Clutch device" " is here intended to be interpreted in a broad manner, for instance referring to a clutch pedal, such as a foot clutch pedal, or a clutch lever, such as a hand clutch lever. Furthermore, the clutch device being in an "affected position" is here intended to be interpreted to at least define a physical state of the clutch device in which it is at least to some extent pressed by the driver, or by other means affected to disengage the clutch associated with the transmission of the vehicle. The amount of e.g. pressure required for the clutch device to be considered to be in an affected position may change with the implementation at hand, and may for instance require the e.g. clutch pedal to be pressed to essentially its maximum limit.

According to a second aspect of embodiments herein, the object is achieved by a start assisting system for facilitating start activities preceding start of an engine of a vehicle. The start assisting system comprises a condition fulfilment determining unit adapted to determine whether predetermined pre-start conditions are fulfilled, which pre-start conditions comprise a condition associated with a wireless electronic key related to the vehicle being identified to be present. The start assisting system further comprises a detecting device adapted to detect a start intention activity of a user of the vehicle, which detecting device is adapted to be comprised in a user driving manoeuvring device of the vehicle. The detecting device is adapted to detect a body part of the user being situated at the user driving manoeuvring device thus indicating the start intention activity. Additionally, the start assisting system comprises a start initiating unit adapted to initiate start of the engine, should the pre-start conditions be determined to be fulfilled while the start intention activity is detected. According to an embodiment, the detecting device may comprise a touch sensitive area adapted to detect presence of the body part. According to another embodiment, the detecting device may be adapted to be comprised in a hand-operated transmission control lever of the vehicle, with the detecting device being adapted to detect at least a part of a hand and/or a finger(s) of the user being situated on the transmission control lever. According to a further embodiment, the detecting device may be adapted to be comprised in a top section of the transmission control lever. Concerning embodiments associated with said second aspect, similar advantages as those mentioned in the foregoing correspondingly apply, why these are not further discussed.

According to a third aspect of embodiments herein, the object is achieved by a vehicle comprising any one of the start assisting systems described in the foregoing, which vehicle further comprises the engine. According to an embodiment, the vehicle may comprise the hand-operated transmission control lever previously discussed. Yet again, concerning embodiment associated with said third aspect, similar advantages as those mentioned in the foregoing correspondingly apply, why these are not further discussed.

### BRIEF DESCRIPTION OF THE DRAWINGS

The various aspects of the non-limiting embodiments of the invention, including particular features and advantages, will be readily understood from the following detailed description and the accompanying drawings, in which:
Figure 1 illustrates an exemplifying vehicle comprising a start assisting system for facilitating start activities preceding start of an engine of the vehicle according to embodiments of the disclosure;
Figure 2 is a schematic block diagram illustrating a start assisting system comprised in a vehicle according to embodiments of the disclosure; and
Figure 3 is a flowchart depicting an exemplifying method performed by a start assisting system for facilitating start activities preceding start of an engine of a vehicle according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to facilitating start activities preceding start of an engine of a vehicle, there will be disclosed that start initiation may be perceived to be performed automatically, thus implying improved convenience.

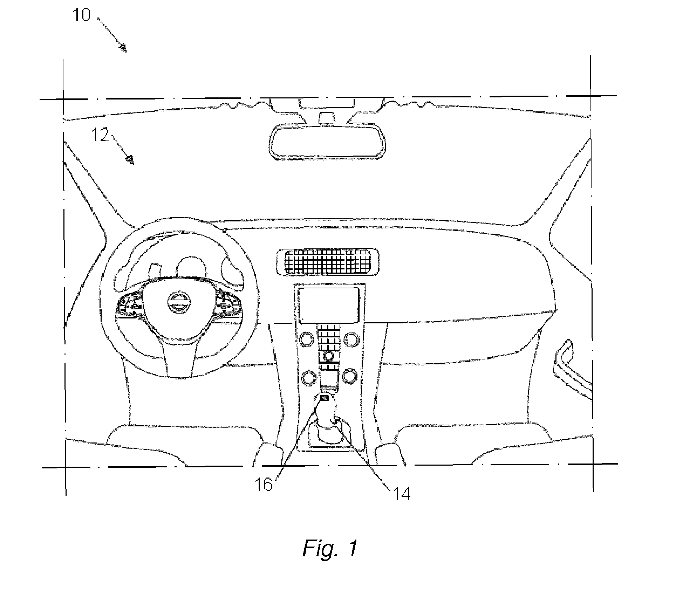

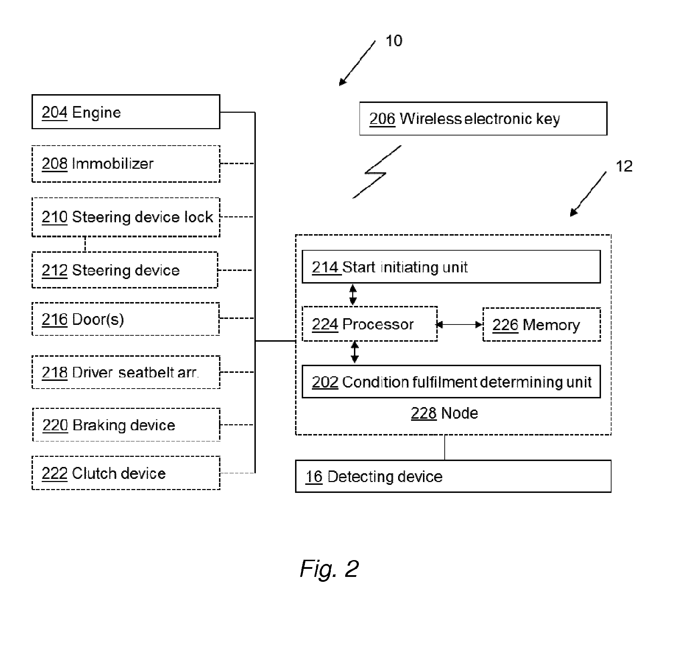

Referring now to the figures and **Figure 1** in particular, there is depicted an exemplifying **vehicle 10** comprising a **start assisting system 12** for facilitating start activities preceding start of an **engine 204** (Fig. 2) of the vehicle 10 according to embodiments of the disclosure. According to the embodiment of Figure 1, the vehicle 10 is a passenger car with manual transmission. The start assisting system 12 comprises a **detecting device 16** adapted to detect a start intention activity of a user (not shown), for instance driver, of the vehicle 10. In order to detect said start intention activity, the detecting device 16 is adapted to be comprised in a **user driving manoeuvring device 14** of the vehicle 10. The user driving manoeuvring device 14 is here a hand-operated transmission control lever of the vehicle 10, and the detecting device 16 is adapted to detect at least a part of a hand and/or finger(s) of the user being situated on the transmission control lever 14. In the shown embodiment, the detecting device 16 comprises a touch sensitive area adapted to detect presence of the body part, here at least a part of a hand and/or finger(s) of the driver. Furthermore, according to the shown embodiment, the detecting device 16 is adapted to be comprised in a top section of the transmission control lever 14. The hand-operated transmission control lever 14 is here a manual transmission control lever, e.g. a manual gear shift.

As further shown in **Figure 2****,** which depicts is a schematic block diagram illustrating a start assisting system 12 comprised in a vehicle 10 according to embodiments of the disclosure, the start assisting system 12 additionally comprises a **condition fulfilment determining unit 202** and a **start initiating unit 214.** Furthermore, the embodiments herein for facilitating start activities preceding start of the engine 204 of the vehicle 10 may be implemented through one or more processors, such as a **processor 224,** together with computer program code for performing the functions and actions of the embodiments herein. Said program code may also be provided as a computer program product, for instance in the form of a data carrier carrying computer program code for performing the embodiments herein when being loaded into the start assisting system 12. One such carrier may be in the form of a CD ROM disc. It is however feasible with other data carriers such as a memory stick. The computer program code may furthermore be provided as pure program code on a server and downloaded to the start assisting system 12, for instance in an assembly plant or at a facility of the supplier. The start assisting system 12 may further comprise a **memory 226** comprising one or more memory units. The memory 226 may be arranged to be used to store e.g. information, and further to store data, configurations, schedulings, and applications, to perform the methods herein when being executed in the start assisting system 12. The processor 224, the memory 226, the condition fulfillment unit 202, and the start initiating unit 214 may for instance be implemented in one or several arbitrary **nodes 228.** A node 228 may be an electronic control unit (ECU) or any suitable generic electronic device. Those skilled in the art will also appreciate that the condition fulfillment unit 202 and the start initiating unit 214 described above, and which will be described in further detail later on, may refer to a combination of analog and digital circuits, and/or one or more processors configured with software and/or firmware, e.g. stored in a memory such as the memory 226, that when executed by the one or more processors such as the processor 224 perform as will be described in more detail later on in this description. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

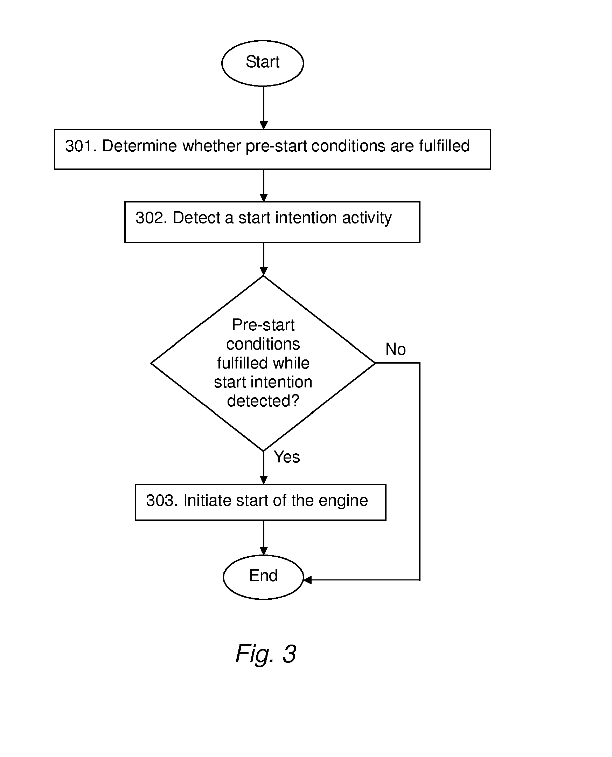

The remaining blocks of Figure 2 will now be described in further detail in conjunction with **Figure 3**, which is a flowchart depicting an exemplifying method performed by the start assisting system 12 for facilitating start activities preceding start of the engine 204 of the vehicle 10 according to embodiments of the disclosure. The exemplifying method, which is applicable prior to start of the vehicle 10, comprises the following actions discussed with support from Figures 1 and 2. The actions may be taken in any suitable order or, where applicable, in parallel.

### Action 301

In Action 301, the start assisting system 12 determines, e.g. by means of the condition fulfilment determining unit 202, whether predetermined pre-start conditions are fulfilled, which pre-start conditions comprises a condition associated with a **wireless electronic key 206** related to the vehicle 10 being identified to be present.

According to the exemplifying embodiment, the pre-start conditions further comprise a condition associated with an **immobilizer 208** of the vehicle 10 being in a disabled state and/or a condition associated with a **steering device lock 210** of a **steering device 212** of the vehicle 10 being in an unlocked state following the wireless electronic key 206 being identified to be present. Here, the steering device lock 210 is represented by a steering wheel lock and the steering device 212 by a steering wheel. Additionally, according to the exemplifying embodiment, the pre-start conditions further comprise a condition associated with at least one **door 216** of the vehicle 10 being in a closed position, a condition associated with a **driver seat belt arrangement 218** of the vehicle 10 being in a buckled position, and/or a condition associated with a **braking device 220** of the vehicle 10 being in an affected position. The at least one door 216 is here represented by all doors through which the driver and passengers may enter the vehicle 10 - here passenger car - accordingly a driver door, passenger door and potential backseat passenger doors, as well as a trunk door and engine hood door, i.e. engine bonnet, of the vehicle 10. The braking device 220 is here represented by a brake pedal, and the affected position represented by the driver pressing the brake pedal 220. Furthermore, according to the shown embodiment, the pre-start conditions further comprise a condition associated with a **clutch device 222** of the vehicle 10 being in an affected position, or a condition associated with the manual transmission control lever 14 of the vehicle 10 being in a non-propelling position in which the vehicle 10 is restricted from being propelled by the engine 204, for instance a neutral state (N). Here, the clutch device 222 is represented by a clutch pedal, and the affected position represented by the driver pressing the clutch pedal 222. According to an alternative embodiment, the pre-start conditions may further comprise a condition associated with an automatic, semi-automatic or continuously variable (CVT) transmission control lever of the vehicle being in a non-propelling position in which the vehicle 10 is restricted from being propelled by the engine 204, for instance a parking (P) state or a neutral (N) state.

It should be noted that in the schematic block diagram of Figure 2, the engine 204, immobilizer 208, steering device lock 210, steering device 212, door(s) 216, driver seatbelt arrangement 218, braking device 220, clutch device 222 and wireless electronic key 206 have been depicted as directly communicating with the start assisting system 12 for the sake of simplicity. In reality, however, information with regards to the predetermined conditions may be retrieved from implementations already available e.g. on-board the vehicle 10, the data of which may be provided for purposes other than those covered by this disclosure. Such data may for instance be available from the same node 228 comprising the condition fulfilment determining unit 202, and/or retrieved via e.g. a communication bus from other e.g. electronic control units.

### Action 302

In Action 302, the start assisting system 12 detects a start intention activity of the user of the vehicle 10 by means of the detecting device 16 adapted to be comprised in the user driving manoeuvring device 14 of the vehicle 10. The detecting device 16 is adapted to detect a body part of the user being situated at the user driving manoeuvring device 14 thus indicating the start intention activity.

### Action 303

In Action 303, the start assisting system 12 initiates, e.g. by means of the start initiating unit 214, start of the engine 204 should the pre-start conditions be determined to be fulfilled while the start intention activity is detected. Action 303, i.e. start initiation of the engine 204, may further comprise start of the engine 204.

Consequently, the driver may initiate start with essentially no further effort required than merely placing a body part, here a hand, at the driving manoeuvring device 16, here on the hand-operated manual transmission control lever, which the driver commonly anyway does when about to start the vehicle 10.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a start assisting system (12) for facilitating start activities preceding start of an engine (204) of a vehicle (10), said method comprising:
*determining* (301) whether predetermined pre-start conditions are fulfilled, said pre-start conditions comprising a condition associated with a wireless electronic key (206) related to said vehicle (10) being identified to be present;
*detecting (302)* a start intention activity of a user of said vehicle (10) by means of a detecting device (16) adapted to be comprised in a user driving manoeuvring device (14) of said vehicle (10), said detecting device (16) being adapted to detect a body part of said user being situated at said user driving manoeuvring device (14) thus indicating said start intention activity; and
*initiating* (303) start of said engine (204), should said pre-start conditions be determined to be fulfilled while said start intention activity is detected.

2. The method in accordance with claim 1, wherein said detecting device (16) comprises a touch sensitive area adapted to detect presence of said body part.

3. The method in accordance with claim 1 or 2, wherein said detecting device (16) is adapted to be comprised in a hand-operated transmission control lever (14) of said vehicle (10), said detecting device (16) being adapted to detect at least a part of a hand and/or finger(s) of said user being situated on said transmission control lever (14).

4. The method in accordance with claim 3, wherein said detecting device (16) is adapted to be comprised in a top section of said transmission control lever (14).

5. The method in accordance with any one of the preceding claims, wherein said action of *initiating* (303) start of said engine (204) further comprises *starting* said engine (204).

6. The method in accordance with any one of the preceding claims, wherein said pre-start conditions further comprise a condition associated with an immobilizer (208) of said vehicle (10) being in a disabled state and/or a condition associated with a steering device lock (210) of a steering device (212) of said vehicle (10) being in an unlocked state following said wireless electronic key (206) being identified to be present.

7. The method in accordance with any one of the preceding claims, wherein said pre-start conditions further comprise a condition associated with at least one door (216) of said vehicle (10) being in a closed position, a condition associated with a driver seat belt arrangement (218) of said vehicle (10) being in a buckled position, and/or a condition associated with a braking device (220) of said vehicle being in an affected position.

8. The method in accordance with any one of the preceding claims, wherein said pre-start conditions further comprise a condition associated with an automatic, semi-automatic or continuously variable (CVT) transmission control lever of said vehicle (10) being in a non-propelling position in which said vehicle (10) is restricted from being propelled by said engine (204), for instance a parking (P) state or a neutral (N) state.

9. The method in accordance with any one of claims 1-7, wherein said pre-start conditions further comprise a condition associated with a clutch device (222) of said vehicle (10) being in an affected position, or a condition associated with a manual transmission control lever (14) of said vehicle (10) being in a non-propelling position in which said vehicle (10) is restricted from being propelled by said engine (204), for instance a neutral state (N).

10. A start assisting system (12) for facilitating start activities preceding start of an engine (204) of a vehicle (10), said start assisting system (12) comprising:
a **condition fulfilment determining unit** (202) adapted to determine (301) whether predetermined pre-start conditions are fulfilled, said pre-start conditions comprising a condition associated with a wireless electronic key (206) related to said vehicle being (10) identified to be present;
a **detecting device** (16) adapted to detect (302) a start intention activity of a user of said vehicle (10), said detecting device (16) being adapted to be comprised in a user driving manoeuvring device (14) of said vehicle (10), said detecting device (16) being adapted to detect a body part of said user being situated at said user driving manoeuvring device (14) thus indicating said start intention activity; and
a **start initiating unit** (214) adapted to initiate (303) start of said engine (204), should said pre-start conditions be determined to be fulfilled while said start intention activity is detected.

11. The start assisting system (12) in accordance with claim 10, wherein said detecting device (16) comprises a touch sensitive area adapted to detect presence of said body part.

12. The start assisting system (12) in accordance with claim 10 or 11, wherein said detecting device (16) is adapted to be comprised in a hand-operated transmission control lever (14) of said vehicle (10), said detecting device (16) being adapted to detect at least a part of a hand and/or a finger(s) of said user being situated on said transmission control lever (14).

13. The start assisting system (12) in accordance with claim 12, wherein said detecting device (16) is adapted to be comprised in a top section of said transmission control lever (14).

14. A vehicle (10) comprising the start assisting system (12) in accordance with any one of claims 10-13, said vehicle (10) further comprising said engine (204).

15. The vehicle (10) in accordance with claim 14 in combination with claim 12 or 13, said vehicle (10) further comprising said hand-operated transmission control lever (14).
